# EUROPEAN PATENT APPLICATION

(11) **EP 2 706 483 A1**
(43) Date of publication of application: **12.03.2014**
(21) Application number: 12183110.1
(22) Date of filing: 05.09.2012
(51) Int. Cl.: G06K 9/00, H04N 7/18, G08B 13/196

(54) **Privacy masking in monitoring system.**

(71) Applicant: Axis AB, 223 69 Lund (SE)
(72) Inventor: Ardö, Björn, SE-224 67 LUND (SE); Gylin, Mattias, SE-224 74 LUND (SE); Nyström, Johan, SE-235 93 VELLINGE (SE)
(74) Representative: Valea AB

(57) **Abstract**

Configuration of a camera in a video monitoring system comprises obtaining (401) an image of a scene. A plurality potentially interesting areas is determined (402) in the image and the image is displayed (403) such that the potentially interesting areas are discernible. User input information is received (404) that is associated with at least one potentially interesting area. Based on the user input information, at least one area of interest is then identified (405) and image masks are generated (406) that comprise masking information. The image masks correspond to a respective identified area of interest and the masking information comprises information corresponding to a position of the identified areas of interest. The image masks are stored (407) for use in subsequent obtaining of images such that image data within the areas of interest in the obtained images is at least obscured.

## Description

### Technical field

The present invention relates to controlling configuration of a camera in a digital video monitoring system and specifically configuration relating to masking of parts of views in a scene that is to be monitored.

### Background

The number of locations that are being monitored by the use of digital video monitoring systems has increased very much during the last decade. Many of such locations involve monitoring of public areas in environments where, inevitably, also private buildings are located. While the benefits of monitoring public areas are self-evident, e.g. in terms of prevention of crime or rapid detection of traffic accidents etc., there is also an aspect of protection of privacy that needs to be addressed when configuring such monitoring systems. For example, it is not desirable to monitor a scene in which a window of a private house, adjacent a road junction that is being monitored for the purpose of traffic safety, is visible. In fact, legislation in some countries requires that image data is masked in such a way that windows of buildings are masked in the image data obtained by monitoring cameras.

Such requirements mean that configuration of cameras in monitoring systems for use in environments with buildings having a plurality of visible windows can be either inefficient or very time consuming. That is, inefficient in terms of preventing the monitoring system from obtaining all available information from a camera view when a single mask is configured that covers all windows on a building. Alternatively, configuration of individual masks for each window typically requires that a human operator identifies and creates masks for each individual window, which is very time consuming.

### Summary

In order to at least mitigate drawbacks of prior art video monitoring systems as discussed above, there is provided in a first aspect a method for controlling configuration of a camera in a video monitoring system. The method comprises obtaining a digital image of a scene that is to be monitored. A plurality potentially interesting areas is determined in the image and the image is displayed such that at least one potentially interesting area of the plurality of potentially interesting areas is discernible. User input information is received that is associated with at least one potentially interesting area. Based on the user input information, at least one area of interest is identified and at least one image mask is generated that comprises masking information. The at least one image mask corresponds to a respective identified area of interest and the masking information comprises information corresponding to a position of the identified area of interest. The at least one image mask is stored for use in subsequent obtaining of images such that image data within the at least one area of interest in the obtained images is at least obscured.

In other words, a configuration method is provided that makes a monitoring system efficient in terms of utilization of the information obtained by cameras in the system, while at the same time being fast in that an operator/user is relieved of the time consuming task of identifying and creating masks for, e.g., hundreds of windows in a monitored scene.

In some embodiments, the reception of user input information comprises reception of information that is indicative of a selection of at least one potentially interesting area. In these embodiments, the identification of at least one area of interest comprises identification of the selected at least one potentially interesting area as the at least one area of interest.

In some embodiments, the reception of user input information comprises reception of information that is indicative of a selection of at least one potentially interesting area. In these embodiments, the identification of at least one area of interest comprises identification of at least one potentially interesting area that is not selected, as the at least one area of interest.

That is, a user/operator can select the potentially interesting areas that are to be identified and masked or de-select those potentially interesting areas that are not to be identified and masked as areas of interest. Which of these alternatives that is the most efficient, can depend on the number of potentially interesting areas that have been determined. For example, if only a few potentially interesting areas have been determined; it is most likely simpler for the user/operator to select those that are to be identified. On the other hand, if there are hundreds of determined (and displayed) potentially interesting areas, it is probably easier for the user/operator to select those that are not of interest, i.e. de-select those potentially interesting areas that are not to be identified as areas of interest.

In some embodiments, the determination of a plurality of potentially interesting areas comprises analyzing image data in the image. The analysis of image data may include edge detection which may include detecting polygons.

In some embodiments, the displaying of the image comprises displaying the potentially interesting area such that the image data within the potentially interesting area is semi-transparent or displaying the potentially interesting area such that the image data within the potentially interesting area is modified in terms of hue or displaying the potentially interesting area such that the image data within the potentially interesting area is provided with a frame.

In some embodiments, the reception of user input information comprises receiving a sequence of coordinates that define positions within respective potentially interesting area.

In some embodiments, the method further comprises receiving user input information associated with at least two potentially interesting areas and identifying, based on the user input information, the at least two potentially interesting areas as at least two areas of interest that shall be merged, and the generating of at least one image mask comprises generating a merged image mask that comprises masking information that corresponds to the masking information of the at least two identified areas of interest.

In some embodiments, the reception of user input information further comprises receiving further user input information indicative of any of: an adjustment of position of the at least one potentially interesting area or an adjustment of size of the at least one potentially interesting area.

In yet some embodiments, the method further comprises receiving user input information indicative of a selection of a potentially interesting area and indicative that the selected potentially interesting area shall be zoomed, controlling the camera to zoom at a position corresponding to the selected potentially interesting area, obtaining a zoomed digital image of the scene corresponding to the selected potentially interesting area at the zoomed position, and displaying the zoomed image.

In some embodiments, the method further comprises: receiving user input information indicative of a selection of an area of interest and indicative that the selected area of interest shall be zoomed, controlling the camera to zoom at a position corresponding to the selected area of interest, obtaining a zoomed digital image of the scene corresponding to the selected area of interest at the zoomed position, analyzing image data in the zoomed image corresponding to the selected area of interest, and calculating, using results from the analysis, updated masking information for the image mask that corresponds to the selected area of interest.

In a second aspect there is provided a controller for use in a video monitoring system. The controller comprises processing circuitry, memory circuitry and communication circuitry that are configured to obtain a digital image of a scene that is to be monitored, determine a plurality of potentially interesting areas in the image, display the image such that at least one potentially interesting area of the plurality of potentially interesting areas is discernible, receive user input information associated with at least one potentially interesting area, identify, based on the user input information, at least one area of interest, generate at least one image mask that comprises masking information, the at least one image mask corresponding to a respective identified area of interest, and store the at least one image mask for use in subsequent obtaining of images such that image data within the at least one area of interest in the obtained images is at least obscured.

Further aspects are provided by a camera comprising the controller of the second aspect and a video server comprising the controller of the second aspect as well as a computer program product that comprises software instructions that, when executed in a processing unit, performs the method as summarized above. The effects and advantages of the second and such further aspects correspond to those discussed above in connection with the first aspect.

Further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the word "comprising" does not exclude other elements or steps.

### Brief description of the drawings

Other features and advantages of the present invention will become apparent from the following detailed description of presently preferred embodiments, with reference to the accompanying drawings, in which
figure 1 schematically illustrates a video monitoring system,
figure 2 schematically illustrates a monitoring camera,
figures 3a-3e schematically illustrate potentially interesting areas and image masks,
figure 4 is a flowchart of a method of controlling configuration of a camera.

### Detailed description of embodiments

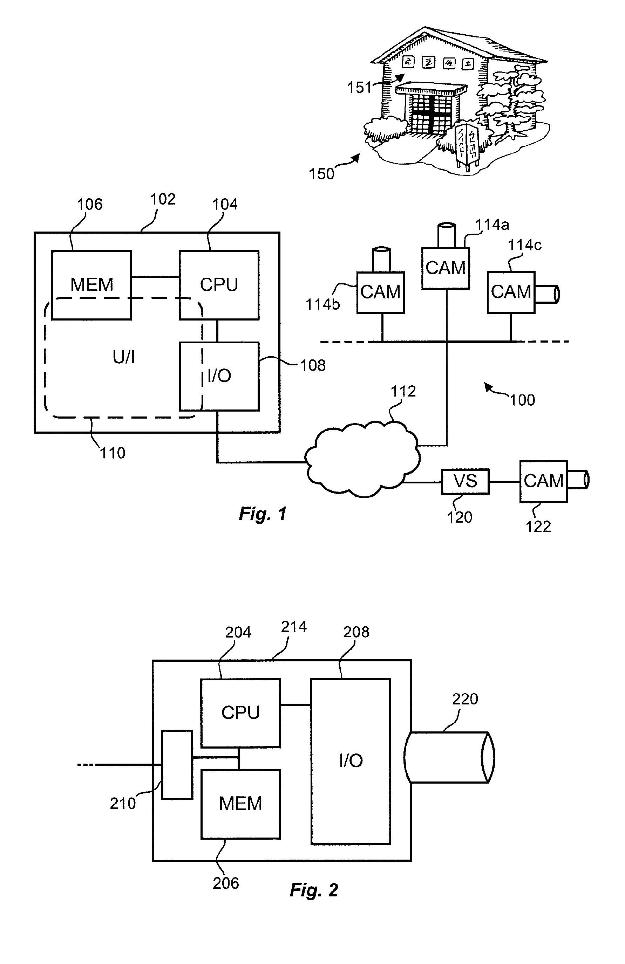

With reference to figure 1, a digital video monitoring system 100 comprises a controller 102 and a plurality of digital video monitoring cameras 114a, 114b and 114c interconnected in a digital communication network 112. An analog camera 122 is connected to the digital network 112 via a video server 120 that is capable of encoding analog image information from the analog camera 122 into digital image information.

The controller 102 comprises, from a hardware perspective, a processing unit 104, memory 106 and input/output circuitry 108. Software instructions stored in the memory 106 are configured to control the controller 102 and its interaction with the system 100 and implement, when executed by the processor and in combination with the hardware units, embodiments of the methods described herein and a user interface 110. The user interface includes a display for displaying video data and other information to a user/operator. The skilled person will realize that the user interface 110 may include other input/output units, including keypads, keyboards, graphical input means such as a mouse as well as loudspeakers etc. that enable an operator/user of the controller 102 to interact with the monitoring system 100.

The network 112 is of a type suitable for communicating digital video data and signaling information between the controller 102 and the cameras 114. For example, the network 112 may be any combination of local area networks and wide area networks that are configured to convey digital data according to any suitable network protocols known in the art, such as the Internet Protocol, IP, suite.

The cameras 114 can be any suitable digital camera capable of generating video sequences and communicating the video sequences, or other type of image data, such as image and video metadata, over the network 112 to the control station 102. Figure 2 illustrates in some more detail a digital camera 214, corresponding to any of the digital cameras 114 in figure 1. The camera 214 comprises a lens system 220 for collecting incident light, an image sensor, for example in the form of a charge coupled device, CCD, a CMOS-sensor or similar sensor, for registering incident light, as well as circuitry as is known in the art. For example, the circuitry typically includes an image processing module 208 that comprises an image/video encoder (implemented in hardware, software, or any combination thereof), a processing unit 204 that manages, for example video analytics, memory 206, and a network interface 210 for connection to the network 112. The image processing module 208 comprising the image/video encoder is arranged to encode captured digital image data into any one of a plurality of known formats for continuous video sequences, for limited video sequences, for still images or for streamed images/video. For instance, the image information may be encoded into MPEG1, MPEG2, MPEG4, H.264, JPEG, M-JPEG, bitmapped, etc.

The video server 120 has the capability of converting analog image data from the analog monitoring camera 122 into digital image data that is in any of the digital formats described above in connection with the digital cameras 114.

The camera 114a and camera 114b are arranged to monitor a scene 150, in which scene 150 a house is present. The house has several windows 151 and, as discussed above, it is not desirable from a privacy protection aspect that image data recorded by the cameras 114a, 114b contain information that can reveal anything of a private nature that takes place behind the windows 151.

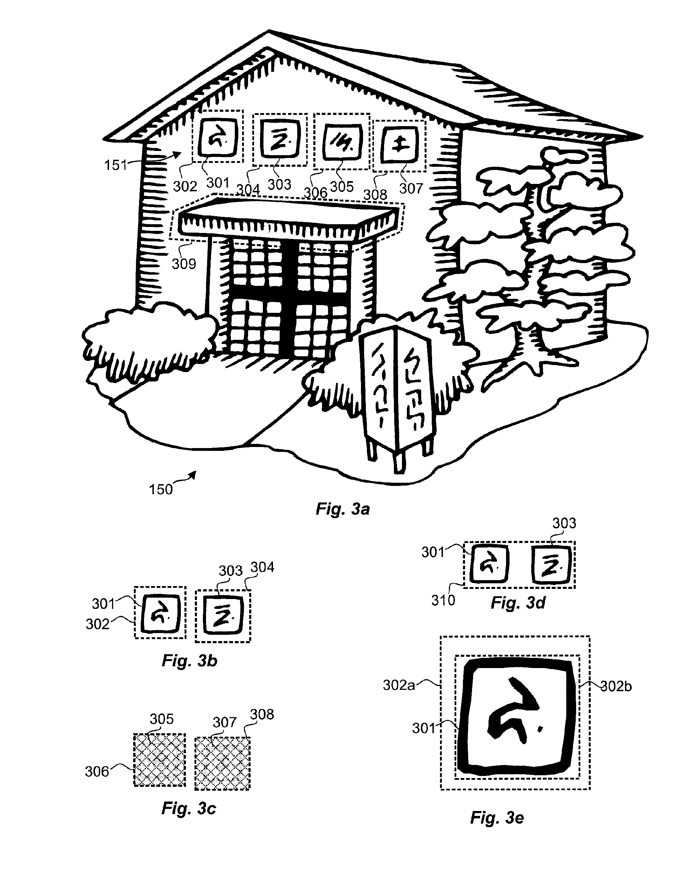

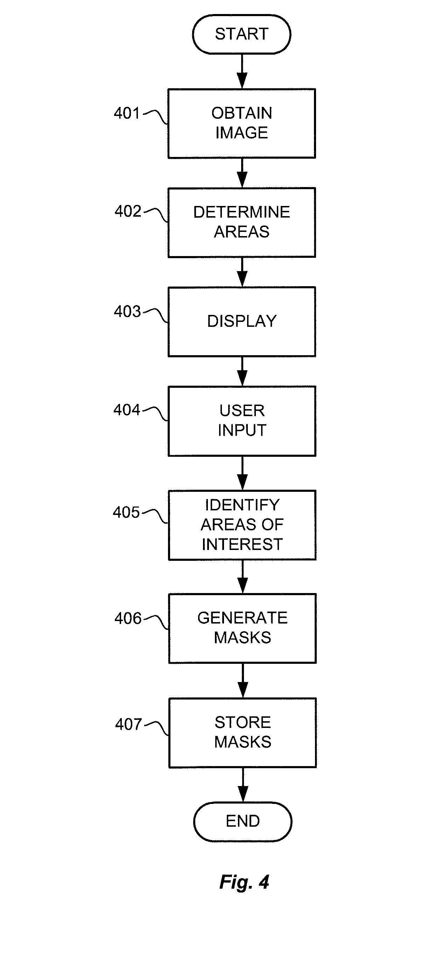

Turning now to figures 3a-d and figure 4, a method in a video monitoring system will be described in some detail. An implementation in a system such as the system 100 in figure 1 will typically be such that a controller is permanently connected to a large number of monitoring cameras and performs many different tasks in connection with the cameras, including the configuration method of the present disclosure. Other implementations can involve one or only a few cameras that are configured by the controller one by one and after completed configuration operate independently without connection to the controller. For example, the controller can be a portable computer device that is connected to the camera only during configuration.

Figure 3a illustrates, schematically, the appearance of an image of the scene 150 in a user interface on a display of a controller, such as the controller 102 in figure 1. The scene 150 comprises a house with a plurality of windows 151. The plurality of windows 151 consists of a first window 301, a second window 303, a third window 305 and a fourth window 307. As discussed above, an object is to configure one or more cameras, such as the cameras 114 and 214 in figures 1 and 2, in an efficient manner.

This is accomplished by a method that implements controlling configuration of a camera in a video monitoring system in a number of method steps. The method commences with an obtaining step 401 in which a digital image of the scene 150 is obtained. For example, the image can be obtained directly from any of the digital cameras 114 or indirectly via the video server 120 from the analog camera 122.

Then follows, in a determination step 402, determining a plurality of potentially interesting areas in the image that was obtained. These potentially interesting areas are schematically illustrated in figure 3a by reference numerals 302, 304, 306 and 308, each corresponding to one of the windows 301, 303, 305 and 307, respectively. The determination involves an analysis of the content of the obtained image and can involve detection of features that are to be considered as potentially interesting. A typical example is edge detection using an appropriate edge detection algorithm capable of detecting shapes of windows or other areas that can be relevant to mask on a building, for example polygons such as rectangles and trapezoids and also shapes that are non-polygons. As illustrated in figure 3, a potentially interesting area 309 has also been determined. However, the potentially interesting area 309 is obviously not related to a window, but simply a "spurious" determination of an approximately rectangular shape defined by a protrusion on the house in the scene 150.

The potentially interesting areas are then displayed, in a display step 403, in order to show a user where the potentially interesting areas are located, and in such a way to make it possible for the user to see what is under the potentially interesting areas, and hence for the user to be able to determine if they are of interest and correctly placed. The displaying of the image can be done in different manners. For example, the displaying can comprises displaying the potentially interesting area such that the image data within the potentially interesting area is semi-transparent and/or modified in terms of hue. The potentially interesting area can also be displayed such that the image data within the potentially interesting area is provided with a frame. These examples are illustrated in figures 3b and 3c. Figure 3b illustrates an example of displaying framed potentially interesting areas 302, 304 associated with the first and second windows 301, 303. Figure 3c illustrates an example of displaying semi-transparent potentially interesting areas 306, 308 associated with the third and fourth windows 305, 307. This can be done in any known manner such that it is evident for the operator/user which areas are determined to be a potentially interesting area.

User input information is then received in a user input reception step 404. The user input information is associated with or indicative of at least one potentially interesting area. For example, an operator can make use of the user interface in a controller, such as the controller 102 in figure 1, to input such information in the form of, e.g., a sequence of coordinates that define positions within respective potentially interesting area. The actual input by the user can be by way of manipulating user interface input means such as a keypad, mouse, touch sensing means etc. For instance, in an example using a mouse, the operator/user can indicate an area by placing the mouse pointer on the potentially interesting area and pressing a first mouse key.

The user input is then utilized in an identification step 405 where, based on the user input information, at least one area of interest is identified.

A generating step 406 then takes place in which at least one image mask is generated. The at least one image mask corresponds to a respective identified area of interest and the mask comprises masking information that includes information that correspond at least to a position of the identified area of interest.

The sequence of displaying 403 the potentially interesting areas followed by the user input 404 that is subsequently used to identify 405 the areas of interest and the mask generation 406 can be realized in different ways.

For example, it can be realized in a "group-wise" manner that includes displaying all potentially interesting areas followed by a user indicating a group consisting of all interesting areas whereupon the masks for these interesting areas of the group are generated. Masks are thus created for the potentially interesting areas being identified by the user as areas of interest.

Alternatively, instead of "group-wise" generation, each mask can be generated directly as a consequence of the user input that indicates each area of interest. That is, the operator/user makes a selection of one or more individual potential areas of interest that subsequently are identified as areas of interest based on the selection and a mask is generated. Such a procedure can include displaying the determined potentially interesting areas one by one followed by a user indicating if the one displayed potentially interesting area is an area of interest. A second potentially interesting area is thereafter displayed and so on.

If the user input indicates that the potentially interesting area is to be identified as an area of interest during any of these alternative procedures, the area can either be visualized in a suitable manner (modification of hue, transparency, framing etc.), or a mask could be generated directly.

The sequence of displaying 403 the potentially interesting areas followed by the user input 404 that is subsequently used to identify 405 the areas of interest and the mask generation 406 can also be realized such that, instead of considering the user input as indicating that a potentially interesting area is to be considered as an area of interest, the user input can be interpreted as being an indicator of one or more potentially interesting area that is to be disregarded.

That is, in such examples the user makes a selection of individual potential areas of interest that subsequently are not to be identified as being areas of interest or, in other words, the user makes a de-selection of potentially interesting areas that are not to be identified as areas of interest. For instance, in an example using a mouse in the user input reception step 404, the operator/user can indicate an area by placing the mouse pointer on the potentially interesting area and pressing a second mouse key and thereby de-select the area, in contrast to the examples where the first mouse key is used to select a potentially interesting area to be identified as an area of interest. During such a "de-selection" procedure, the potentially interesting areas that are indicated by the operator/user input can be visualized in a suitable manner, such as modification of hue, transparency, framing etc. Moreover, as the skilled person will realize, in such a de-selection procedure, the mask generation 406 typically takes place after all areas of interest have been identified.

Such a de-selection procedure can be used in cases where almost all potentially interesting areas among a large number of potentially interesting areas are to be identified as areas of interest. Instead of providing a large number of user input actions and thereby identify the areas of interest, a user can in such implementations identify the few potentially interesting areas that are to be disregarded, and thereby save time. For example, as illustrated in figure 3a, the potentially interesting area 309 that is not related to a window is typically an area that is to be disregarded.

Moreover, the displaying of the potentially interesting areas can be accompanied by a display of user interface tools such as buttons, menu items etc. that, when activated, performs actions that triggers the actual identification of the areas of interest. For example, a user interface button can be utilized to perform an action to identify all displayed potentially interesting areas as areas of interest.

The image mask or masks are stored, in a storing step 407, for use in subsequent obtaining of images such that image data within the at least one area of interest in the obtained images is at least obscured. That is, when monitoring, e.g., the scene 150 in figure 3a the windows 151 are obscured such that a viewer of images recorded by the camera is prevented from seeing what is going on behind the windows 151. The process of obtaining images is to be interpreted in a broad sense and includes both recording (i.e. involving more or less permanent storage of the images in the camera or in other entities connected to the camera) as well as more or less transient conveying of images from the camera to receiving entities. Moreover, the process of how to obscure the image data at the positions of the areas of interest can be realized such that image data is completely removed from, e.g., an MPEG stream or obscured in a suitable manner by being encrypted or pixelated.

The method can comprise further reception of user input information, for example in the user input reception step 404, that is indicative of at least two potentially interesting areas and indicative that the at least two potentially interesting areas shall be merged. In such examples, the generating of a at least one image mask in the generating step 405 comprises generating a merged image mask that comprises masking information that corresponds to the masking information of the at least two identified areas of interest. This is illustrated in figure 3d, where user input has been received that indicates that the potentially interesting areas 302 and 304 are merged, after being identified, into a single area of interest 310. Such a procedure is useful in situations where a monitored scene comprises multi-pane or mullioned windows. That is, it is not necessary to identify individual window panes in a multi-pane window as separate areas of interest.

Figure 3e illustrates an example in which further user input information has been received that is indicative of an adjustment of position and/or size of the at least one potentially interesting area. The potentially interesting area 302 associated with the first window 301 has been adjusted from a first alternative 302a to a second alternative 302b. In the second alternative, the area 302b has a close correspondence to the actual spatial extent of the first window 301, which means that the mask that is created and used in subsequent monitoring will obscure as little as possible in the area around the first window 301. This can be of importance in a situation where a large portion of the viewed scene consists of windows that must be obscured from view.

The adjustment of the position of the potentially interesting area is performed as a consequence of user input in the form of, e.g., pointing and clicking using a computer mouse. The adjustment can be performed before or after zooming the displayed image, as will be described below.

User input information indicative of an adjustment of the position or size of a potentially interesting area or area of interest can for instance be that the user marks on or near one of the detected edges of the area. The user input can then be an indication that the specific edge shall move to the next detected edge either making the area bigger or smaller. Such user input information can also be that the user marks one of the areas which can be an indication that all edges of the area shall be moved and thereby making the area bigger or smaller.

The adjustment can involve zooming of the displayed image. That is, the method can further comprise receiving user input information indicative of a selection of a potentially interesting area and indicative that the selected potentially interesting area shall be zoomed. The camera is then controlled to zoom at a position corresponding to the selected potentially interesting area. A zoomed digital image of the scene corresponding to the selected potentially interesting area at the zoomed position is then obtained and displayed. With reference to figure 3e, such a zooming procedure will make it simple for a user to adjust the potential areas of interest as desired.

Zooming can also be utilized to get a zoomed digital image of a scene including a number of areas that can be potentially interesting areas but they are too small to distinguish and hence difficult to determine if they are potentially interesting areas or not without zooming in on them. Hence, the areas being relevant for masking only in a zoomed position will also be masked. In fact, the determination of a plurality of potentially interesting areas is advantageously done in the zooming position most applicable for the scene or part of the scene that is to be monitored.

Zooming can also be utilized to adjust already identified areas of interest. Such examples include receiving user input information indicative of a selection of an area of interest and indicative that the selected area of interest shall be zoomed. The camera is then controlled to zoom at a position corresponding to the selected area of interest and a zoomed digital image is obtained of the scene corresponding to the selected area of interest at the zoomed position. The image data in the zoomed image corresponding to the selected area of interest is then analyzed and, using results from the analysis, updated masking information is calculated for the image mask that corresponds to the selected area of interest.

In situations where zooming is performed, it is typically desirable that the zooming is performed such that an appropriate area around the area of interest (or potentially interesting area) is displayed and thereby enabling a user to perform suitable position adjustments to the areas.

The adjustment of the position and/or size of the potentially interesting areas, without zooming as well as with zooming, can also be performed automatically, i.e. not as a consequence of a user input. In such examples, the method can further comprise a step of adjustment of position and/or size of at least one potentially interesting area. Specifically, if there is some difficulty in the step 402 of determining potentially interesting areas, adjustments and zooming can be made. For instance if there is a difficulty determining all edges surrounding a potentially interesting area or if there are edges in close vicinity of each other such that it is difficult to distinguish which edge is the relevant one, the camera can then automatically be controlled to zoom at a position corresponding to that concerned potentially interesting area. A zoomed digital image of the scene corresponding to the concerned potentially interesting area at the zoomed position is then obtained and displayed and the position and/or size of the potentially interesting area is adjusted.

## Claims

1. A method for controlling configuration of a camera in a video monitoring system, comprising:
- obtaining a digital image of a scene that is to be monitored,
- determining a plurality of potentially interesting areas in the image,
- displaying the image such that at least one potentially interesting area of the plurality of potentially interesting areas is discernible,
- receiving user input information associated with at least one potentially interesting area,
- identifying, based on the user input information, at least one area of interest,
- generating at least one image mask that comprises masking information, the at least one image mask corresponding to a respective identified area of interest, the masking information comprising information corresponding to a position of the identified area of interest, and
- storing the at least one image mask for use in subsequent obtaining of images such that image data within the at least one area of interest in the obtained images is at least obscured.

2. The method of claim 1, wherein
- the reception of user input information comprises reception of information that is indicative of a selection of at least one potentially interesting area, and wherein
- the identification of at least one area of interest comprises identification of the selected at least one potentially interesting area as the at least one area of interest.

3. The method of claim 1, wherein
- the reception of user input information comprises reception of information that is indicative of a selection of at least one potentially interesting area, and wherein
- the identification of at least one area of interest comprises identification of at least one potentially interesting area that is not selected, as the at least one area of interest.

4. The method of any of claims 1 to 3, wherein the determination of a plurality of potentially interesting areas comprises:
- analyzing image data in the image, the analysis including edge detection.

5. The method of claim 4, wherein the analysis of the image data further comprises:
- detecting polygons.

6. The method of any one of claims 1 to 5, wherein the displaying of the image comprises any of:
- displaying the potentially interesting area such that the image data within the potentially interesting area is semi-transparent,
- displaying the potentially interesting area such that the image data within the potentially interesting area is modified in terms of hue, and
- displaying the potentially interesting area such that the image data within the potentially interesting area is provided with a frame.

7. The method of any one of claims 1 to 6, wherein the reception of user input information comprises receiving a sequence of coordinates that define positions within respective potentially interesting area.

8. The method of any one of claims 1 to 7, further comprising:
- receiving user input information associated with at least two potentially interesting areas,
- identifying, based on the user input information, the at least two potentially interesting areas as at least two areas of interest that shall be merged, and
wherein the generating of at least one image mask comprises:
- generating a merged image mask that comprises masking information that corresponds to the masking information of the at least two identified areas of interest.

9. The method of any of claims 1 to 8, wherein the reception of user input information further comprises receiving further user input information indicative of any of:
- an adjustment of position of the at least one potentially interesting area,
- an adjustment of size of the at least one potentially interesting area.

10. The method of claim 9, further comprising:
- receiving user input information indicative of a selection of a potentially interesting area and indicative that the selected potentially interesting area shall be zoomed,
- controlling the camera to zoom at a position corresponding to the selected potentially interesting area,
- obtaining a zoomed digital image of the scene corresponding to the selected potentially interesting area at the zoomed position, and
- displaying the zoomed image.

11. The method of any one of claims 1 to 10, further comprising:
- receiving user input information indicative of a selection of an area of interest and indicative that the selected area of interest shall be zoomed,
- controlling the camera to zoom at a position corresponding to the selected area of interest,
- obtaining a zoomed digital image of the scene corresponding to the selected area of interest at the zoomed position,
- analyzing image data in the zoomed image corresponding to the selected area of interest, and
- calculating, using results from the analysis, updated masking information for the image mask that corresponds to the selected area of interest.

12. A controller for use in a video monitoring system, the controller comprising processing circuitry, memory circuitry and communication circuitry that are configured to:
- obtain a digital image of a scene that is to be monitored,
- determine a plurality of potentially interesting areas in the image,
- display the image such that at least one potentially interesting area of the plurality of potentially interesting areas is discernible,
- receive user input information associated with at least one potentially interesting area,
- identify, based on the user input information, at least one area of interest,
- generate at least one image mask that comprises masking information, the at least one image mask corresponding to a respective identified area of interest, and
- store the at least one image mask for use in subsequent obtaining of images such that image data within the at least one area of interest in the obtained images is at least obscured.

13. A camera comprising the controller of claim 12.

14. A video server comprising the controller of claim 12.

15. A computer program product comprising software instructions that, when executed in a processing unit, performs the method according to any of claims 1 to 11.
